# EUROPÄISCHE PATENTANMELDUNG

(11) **EP 1 152 515 A2**
(43) Veröffentlichungstag der Anmeldung: **07.11.2001**
(21) Anmeldenummer: 01109154.3
(22) Anmeldetag: 12.04.2001
(51) Int. Cl.: H02K 1/27

(54) **Läufer für hohe Drehzahlen**

(30) Priorität: 28.04.2000 DE 10020947
(71) Anmelder: SIEMENS AKTIENGESELLSCHAFT, 80333 München (DE)
(72) Erfinder: Georg, Klaus, 97616 Salz (DE); Ludwig, Felix, 97688 Bad Kissingen (DE); Schneider, Wolfgang, 36037 Fulda (DE); Sopp, Helmut, 97650 Fladungen (DE)

(57) **Zusammenfassung**

Die Drehzahl bei Läufern mit einteiligem Blechpaket ist durch die nicht allzu hohe mechanische Belastbarkeit der Verbindungsstege zwischen den Polen begrenzt. Daher sucht man nach Läufern, die einen ähnlich geringen Fertigungsaufwand besitzen und doch höhere Drehzahlen erlauben. Erfindungsgemäß wird dies dadurch erzielt, dass der Läufer aus einem ersten Innenblechpaket (1) und einem zweiten Außenblechpaket (2) sowie dazwischenliegenden Dauermagneten (3) besteht. Dadurch lassen sich mechanische Spannungsspitzen an Verbindungsstegen vermeiden und höhere Drehzahlen erreichen, wobei der Fertigungsaufwand verhältnismäßig niedrig ist.

## Beschreibung

Die vorliegende Erfindung betrifft einen Läufer mit einem im wesentlichen zylindrischen Blechpaket und mehreren Magneteinrichtungen. Insbesondere betrifft die Erfindung einen Läufer, der für hohe Drehzahlen geeignet ist.

Als gattungsgemäßer Stand der Technik ist eine dauermagneterregte Synchronmaschine bekannt, die einen mit einer Wicklung versehenen Ständer und einen mit Dauermagneten bestückten Läufer aufweist. Trotz der Auslegung der Maschine für hohe Drehzahlen wird ein geringer Fertigungsaufwand und verbesserte elektrische Eigenschaften der Maschine dadurch erreicht, dass die Dauermagnete in entsprechende Aufnahmeöffnungen eingesetzt sind, die in dem eine geschlossene Umfangskontur aufweisenden Blechpaket des Läufers vorgesehen sind. Dabei ist die Anordnung der Dauermagnete je Pol so getroffen, dass diese in der Polmitte einen minimalen und in der Pollücke einen maximalen Abstand zum Außenumfang des Läuferblechpakets aufweisen.

Als weiterer Stand der Technik ist das deutsche Gebrauchsmuster DE-U-84 27 704 bekannt. Dort ist ein Rotor für eine elektrische Maschine beschrieben, bei dem umlaufende Teile des Rotors mittels einer Metallband- oder Drahtbandage auf einem Tragkörper festgespannt sind, um ein Ablösen der Teile unter Fliehkrafteinwirkung bei hohen Drehzahlen zu verhindern. Die beiden Enden der Bandage sind hierbei am Tragkörper befestigt, damit sich die Bandage nicht lockern oder verschieben kann.

Der erstgenannte Rotor hat zwar den fertigungstechnischen Vorteil, dass lediglich ein einteiliges Blechpaket, das durch Stanzen von Einzelblechen und Verkleben mittels Backlack entsteht, vorgesehen ist und Dauermagnete verhältnismäßig einfach in die ausgestanzten Taschen bzw. Aufnahmeöffnungen eingebracht werden können. Aufgrund dieser Einteiligkeit des Blechpakets mit den gestanzten Öffnungen für die Dauermagnete ergeben sich aber sehr hohe mechanische Spannungen an den Verbindungsstegen zwischen den Polen. Die Orte, an denen die höchsten mechanischen Spannungen auftreten, werden üblicherweise als "hot-spot" bezeichnet. An den Orten außerhalb dieser hot-spots sind die mechanischen Spannungen im Läufer deutig geringer. Bei Drehzahlen des Läufers oberhalb der kritischen Maximaldrehzahl entstehen also Beschädigungen zunächst an den Verbindungsstegen zwischen den Polen, also den hot-spots.

Die in dem obengenannten deutschen Gebrauchsmuster dargestellte Drahtbandage ermöglicht zwar sehr hohe Drehzahlen des Rotors, aber der Fertigungsaufwand für derartige Drahtbandagen ist unwirtschaftlich hoch.

Aus dieser Problematik ergibt sich die Aufgabe der vorliegenden Erfindung, die darin besteht, einen Rotor vorzuschlagen, der für sehr hohe Drehzahlen geeignet ist und dennoch mit vertretbarem Aufwand zu fertigen ist.

Erfindungsgemäß wird diese Aufgabe durch einen Läufer bzw. Rotor nach Anspruch 1 gelöst. Der Läufer besteht aus einem ersten, im wesentlichen zylindrischen Blechpaket, auf dessen Außenumfang je nach Polzahl mehrere Magneteinrichtungen angeordnet sind. Bezogen auf die Zylinderform des ersten Blechpakets befindet sich radial über den Magneteinrichtungen ein zweites, im wesentlichen zylindrisches Blechpaket, wobei die Magneteinrichtungen fest zwischen den beiden Blechpaketen fixiert sind.

Der Vorteil dieser Ausgestaltung des Läufers besteht darin, dass die Einzelteile des Läufers einfach gestaltet sind, so dass deren Fertigung sowie deren Zusammenbau relativ einfach erfolgen kann. Darüber hinaus bleibt der Vorteil des erstgenannten Stands der Technik erhalten, dass durch das äußere Blechpaket Wirbelstromverluste im Außenbereich des Läufers reduziert werden. Letztendlich besteht der Hauptvorteil des erfindungsgemäßen Läuferaufbaus aber darin, dass auf die Verbindungsstege zwischen den Polen verzichtet werden kann. Dadurch können Drehzahlerhöhungen von etwa 40% gegenüber bekannten Läufern mit derartigen Verbindungsstegen erzielt werden.

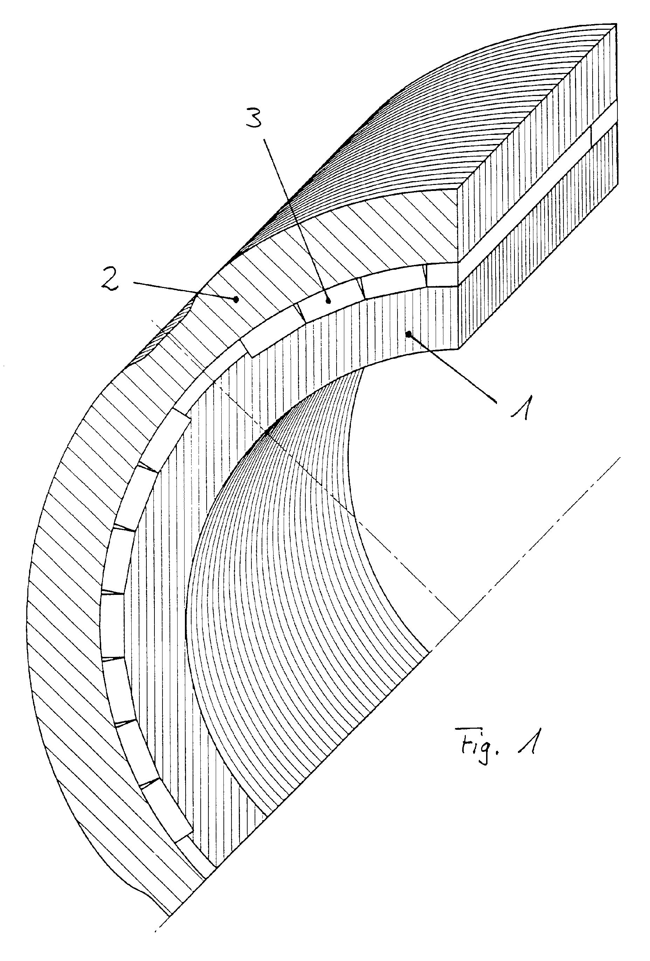

Die vorliegende Erfindung wird nun anhand der beigefügten Zeichnung näher erläutert. Die dort dargestellte Figur 1 zeigt eine perspektivische Ansicht des erfindungsgemäßen Läufers mit den beiden Blechpaketen.

Gemäß Figur 1, die lediglich ein Segment des erfindungsgemäßen Läufers darstellt, besteht dieser aus einem ersten inneren Blechpaket 1, einem zweiten äußeren Blechpaket 2 und mehreren dazwischenliegenden Dauermagneten 3.

Das erste innere Blechpaket 1 weist eine Öffnung auf, die die nicht dargestellte Welle des Läufers aufnehmen kann. Die Auβenumfangsfläche des ersten inneren Blechpakets 1 kann so gestaltet sein, dass, wie in Figur 1 dargestellt ist, spezielle Vertiefungen für die aufzunehmenden Dauermagnete 3 vorgesehen sind.

Die Anzahl der auf der Außenfläche des inneren Blechpakets 1 befindlichen Dauermagnete 3 ist grundsätzlich variabel und richtet sich nach der gewünschten Polzahl sowie der fertigungstechnisch günstigsten Unterteilung der Pole in Einzelmagnete. Entsprechend Figur 1 besteht ein Pol bei diesem Ausführungsbeispiel aus sieben Teilmagneten in Umfangsrichtung. Die Bestückung des Läufers mit Dauermagneten in axialer Richtung ist ebenfalls variabel und richtet sich auch nach fertigungstechnischen bzw. wirtschaftlichen Gegebenheiten. Es versteht sich von selbst, dass die Außenkontur des inneren Blechpakets an die Form der Dauermagnete, oder umgekehrt, anzupassen ist, um magnetische Verluste zu vermeiden.

Radial über den Dauermagneten 3 befindet sich das zweite äußere Blechpaket 2. Die Außenkontur der Dauermagnete 3 ist vorteilhafterweise an die innere Umfangsfläche des äußeren Blechpakets 2, oder umgekehrt, angepasst, um wiederum magnetische Verluste zu vermeiden.

Die äußere Umfangsfläche des äußeren Blechpakets 2 ist nach Figur 1 unrund moduliert, um ein sinusförmiges Magnetfeld zu erzeugen. Die Erfindung ist aber nicht auf die in Figur 1 dargestellte Außenkontur des äußeren Blechpakets beschränkt sondern vielmehr auch bei anderen Außenkonturen verwendbar.

Wie oben bereits erwähnt wurde, weist das einteilige Blechpaket nach dem Stand der Technik zwischen den Polen Verbindungsstege auf. Diese Verbindungsstege besitzen eine T-förmige Gestalt und stellen damit die Bindeglieder der Blechpaketabschnitte in Umfangsrichtung und in radialer Richtung dar. Die Teile der Verbindungsstege, die das Blechpaket in Umfangsrichtung zusammenhalten, zeigen auch einen elektromagnetischen Nutzen. Der magnetische Fluss, der durch einen d-Strom im Ständer erzeugt wird, kann sich im Läufer über die Verbindungsstege schließen und muss nicht über die Magnete geleitet werden. Dadurch ist der effektive Luftspalt relativ klein und die Induktivität entsprechend hoch. Somit lässt sich eine gute Feldschwächung in der Maschine erzielen.

Der Läufer gemäß der vorliegenden Erfindung kann folgendermaßen gefertigt werden. Zunächst werden beispielsweise mittels Backlackverfahren zwei aus einzeln Blechen bestehende Blechpakete, nämlich das Läuferinnenpaket 1 und das Läuferauβenringpaket 2, hergestellt. Auf das Läuferinnenpaket 1 werden ggf. in entsprechenden Kerben Dauermagnete geklebt. Die durch die einzelnen Dauermagnete entstehende unregelmäßige Außenkontur kann durch Schleifen an das Läuferaußenringpaket 2 angepasst werden. Das Außenringpaket 2 wird schließlich thermisch gefügt und somit auf das mit Magneten versehene Innenpaket 1 montiert. Dadurch werden die Dauermagnete 3 derart zwischen das Innenpaket 1 und das Außenringpaket 2 gepresst, dass sie sich während des Laufs des Rotors auch bei hohen Drehzahlen weder radial noch in Umfangsrichtung bewegen können.

Bei einer weiteren Ausführungsform der vorliegenden Erfindung besteht der Innenzylinder 1 aus einer massiven Welle oder Hohlwelle. Die axiale Länge der Welle bzw. Hohlwelle 1 ist von der axialen Länge der Magnet-Außenblechpaket-Anordnung 2, 3 unabhängig und kann diese übersteigen. Bei dieser Ausführungsform des Läufers mit massiver Welle bzw. Hohlwelle sind in entsprechender Weise die gleichen Ausgestaltungen wie bei der vorhergehenden Ausführungsform mit Blechpaket-Innenzylinder 1 denkbar. Eine massive Hohlwelle eignet sich aber insbesondere als Aufnahme für eine oder Teil einer Werkzeugspindel bzw. als vollständige Werkzeugspindelwelle.

Die vorliegende Erfindung ist grundsätzlich auch auf spulenerregte Induktionsmaschinen anwendbar.

Die in Figur 1 dargestellte und oben beschriebene Ausführungsform des erfindungsgemäßen Läufers eignet sich insbesondere für Synchronmaschinen. Dies schließt aber nicht die Anwendung bei anderen Induktionsmaschinen aus.

## Patentansprüche

1. Läufer für eine Induktionsmaschine mit einem ersten, im wesentlichen zylindrischen Blechpaket (1) und mehreren Magneteinrichtungen (3), **dadurch gekennzeichnet, dass** am Außenumfang des ersten, im wesentlichen zylindrischen Blechpakets (1) die mehreren Magneteinrichtungen (3) angeordnet sind und, bezogen auf die Zylinderform des ersten Blechpakets (1), radial über den Magneteinrichtungen (3) ein zweites, im wesentlichen zylindrisches Blechpaket (2) derart angeordnet ist, dass die Magneteinrichtungen (3) fest zwischen den beiden Blechpaketen (1,2) fixiert sind.

2. Läufer nach Anspruch 1, wobei die Magneteinrichtungen (3) Dauermagnete umfassen.

3. Läufer nach Anspruch 1 oder 2, wobei das zweite Blechpaket (2) auf die Anordnung des ersten Blechpakets (1) mit den Magneteinrichtungen (3) thermisch gefügt ist.

4. Läufer nach einem der vorhergehenden Ansprüche, wobei die radial nach außen gerichteten Konturen der Magneteinrichtungen (3) kreisbogenförmig gestaltet sind, so dass die Außenkonturen der Magneteinrichtungen (3) einen Zylindermantel bilden, der lediglich durch die Zwischenräume zwischen den Magneteinrichtungen (3) unterbrochen ist und im wesentlichen der Innenumfangsfläche des zweiten Blechpakets (2) entspricht.

5. Läufer nach einem der vorhergehenden Ansprüche, wobei das zweite Blechpaket (2) eine derart modulierte Außenumfangskontur aufweist, dass das Magnetfeld am Außenumfang des Läufers sinusförmig moduliert ist.

6. Läufer für eine Induktionsmaschine mit einer massiven Welle oder Hohlwelle (1) und mehreren Magneteinrichtungen (3), die am Außenumfang der Welle bzw. Hohlwelle (1) angeordnet sind, **dadurch gekennzeichnet, dass** bezogen auf die Welle bzw. Hohlwelle (1), radial über den Magneteinrichtungen (3) ein im wesentlichen zylindrisches Blechpaket (2) derart angeordnet ist, dass die Magneteinrichtungen (3) fest zwischen der Welle bzw. Hohlwelle (1) und dem Blechpaket (2) fixiert sind.

7. Läufer nach Anspruch 6, wobei die Magneteinrichtungen (3) Dauermagnete umfassen.

8. Läufer nach Anspruch 6 oder 7, wobei das Blechpaket (2) auf die Anordnung der Welle bzw. Hohlwelle (1) mit den Magneteinrichtungen (3) thermisch gefügt ist.

9. Läufer nach einem der vorhergehenden Ansprüche 6 bis 8, wobei die radial nach außen gerichteten Konturen der Magneteinrichtungen (3) kreisbogenförmig gestaltet sind, so dass die Außenkonturen der Magneteinrichtungen (3) einen Zylindermantel bilden, der lediglich durch die Zwischenräume zwischen den Magneteinrichtungen (3) unterbrochen ist und im wesentlichen der Innenumfangsfläche des Blechpakets (2) entspricht.

10. Läufer nach einem der vorhergehenden Ansprüche 6 bis 9, wobei das Blechpaket (2) eine derart modulierte Außenumfangskontur aufweist, dass das Magnetfeld am Außenumfang des Läufers sinusförmig moduliert ist.

11. Läufer nach einem der vorhergehenden Ansprüche 6 bis 10, wobei die Hohlwelle (1) zur Aufnahme einer Werkzeugspindel dient.

12. Induktionsmaschine, insbesondere Synchronmaschine, mit einem Läufer nach einem der vorhergehenden Ansprüche.
